# EUROPEAN PATENT APPLICATION

(11) **EP 2 889 362 A1**
(43) Date of publication of application: **01.07.2015**
(21) Application number: 14197752.0
(22) Date of filing: 12.12.2014
(51) Int. Cl.: C12G 3/06, A23L 1/302

(54) **Wine-based flavoured carbonated tonic energy drink**

(30) Priority: 24.12.2013 RU 2013157059
(71) Applicant: TSN Brands Ltd, Tortola (VG)
(72) Inventor: Markovich, Peiko Igor, 191002 Saint Petersburg (RU)
(74) Representative: Dunleavy, Kevin James

(57) **Abstract**

The invention relates to the wine industry and can be used in liqueur, spirits/vodka industry and soft drink industry. To prepare the wine-based flavored carbonated tonic energy drink the following ingredients are used: table dry white wine-making material and/or fruit wine-making material, sugar, citric acid, Tenstrike flavoring, Ecotan complex food additive, guarana extract, Aromacolor food additive, vitamin premix, carbon dioxide and water prepared with the following content in kg for 1000 dal of the final product :

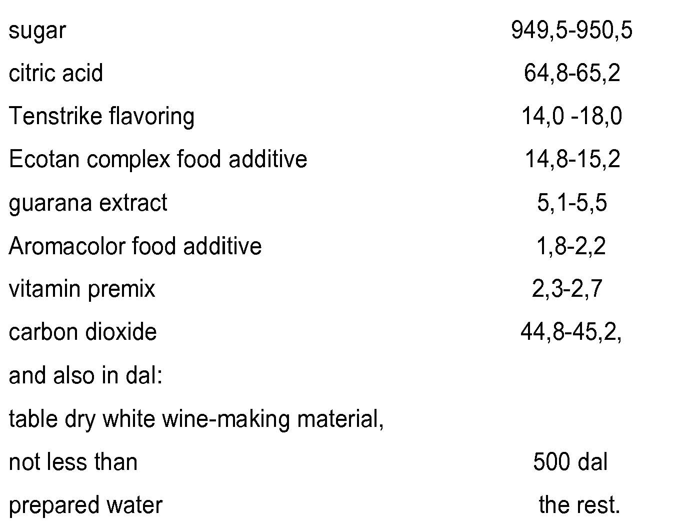

The invention enhances energy properties of natural final product by 10% and organoleptic properties on 0,1 point.

## Description

### FIELD OF THE INVENTION

The field of the invention relates to the wine industry, and the invention can also be used in the liqueur, spirits/vodka and soft drink industry.

### BACKGROUND OF THE INVENTION

Wine-based carbonated drinks, according to the GOST R 51156-98 (Russian National Standard), are prepared using grape or fruit wine-making materials or their concentrates, water, with or without food flavor additives , with or without colorants, sugar, citric acid, and drinking water, that are authorized for use by Rospotrebnadzor (Federal Service on Customers' Rights Protection and Well-Being of Humans.).

Some drinks are known, including energy drinks, which comprise among other ingredients, mate and guarana extracts (RF Patent 2289618, 2006) and natural flavorings, such as cherry (RF Patent 2156286, 2000), passion fruit (RF Patent application 2001131886, 2002), and orange (RF Patent 2142992, 1999).

The closest analogue is a wine-based energy drink prepared using table dry white wine-making material such as, sugar, citric acid, natural flavorings, such as cherry, barberry, wild berries and orange, Ecotan complex food additive Ecotan, flavor additive, mate extract, guarana extract, Aromacolor food additive , vitamin premix, carbon dioxide and prepared water (RF Patent 2482171, 20.05.2013).

Disadvantages of known drinks are low energy, low toning properties and poor organoleptic characteristics.

### DISCLOSURE OF THE INVENTION

The invention is aimed at creating new carbonated energy drinks with improved organoleptic characteristics.

The technical result of the invention is to increase toning, and energy properties and improve organoleptic characteristics of the final product.

This result is ensured by having the wine-based flavored, carbonated tonic energy drink characterized by preparing table dry white wine-making material, sugar, citric acid, Tenstrike flavoring, the complex food additive Ecotan, guarana extract, the food additive Aromacolor, vitamin premix, carbon dioxide and water prepared with the following content in kg for 1000 dal of the final product:

| | |
|---|---|
| sugar | 949,5-950,5 |
| citric acid | 64,8-65,2 |
| Tenstrike flavouring | 14,0-18,0 |
| Ecotan complex food additive | 14,8-15,2 |
| guarana extract | 5,1-5,5 |
| Aromacolor food additive | 1,8-2,2 |
| vitamin premix | 2,3-2,7 |
| carbon dioxide | 44,8-45,2, |
| and also in dal: | |
| table dry white wine-making material, not less than | 500 dal |
| prepared water | the rest. |

To prepare a wine-based flavored carbonated tonic energy drink the following ingredients are used:
- table dry wine-making materials, domestic or imported, meeting the requirements of GOST R 52523-2006;
- table fruit wine-making material, dry wine-making material, domestic or imported, meeting the requirements of GOST R 52836-2007, The term "wine-making material" is a commonly known term to those skilled in the art of wine production processes. These materials are available to the winemaker as regular commercial products with following physico-chemical characteristics: the volume fraction of ethyl alcohol, %: 9-14%

Mass concentration of residual sugars g/dm³, not more than: 3
Mass concentration of titratable acids, g/dm³: 4-8
Mass concentration of volatile acids in terms of acetic acid, g/dm³ not more than: 1.1
The "table dry white wine-making material" meets the requirements of GOST R 52523-2006 "Table wines and table wine stocks. General technical conditions" and GOST R 52836-2006 "Table fruit wines and table fruit wine stocks. General technical conditions".
- citric acid, defined in the standard GOST 908-2004, or imported, authorized for use by the Rospotrebnadzor agency, in the prescribed manner;
- sand sugar defined in the standard GOST 21-94 or white sugar defined in the standard GOST R 53396-2009;
- Ten Strike Dark AU 17952 flavoring not containing rectified ethyl alcohol and approved for use by the Rospotrebnadzor agency. The details of the natural flavoring "Ten Strike Dark AU17952"; Manufacturer: Frutarom (UK) Ltd.; Composition: natural aromatic substances and preparations (i.e. natural flavorings), propylene glycol (FEMA 2940), acetic acid (FEMA 2006), ethyl acetate (FEMA 2414);
- Ecotan complex food additives approved for use by the Rospotrebnadzor agency. Complex food additive "ECOTAN": Manufacturer: ZAO "EKO RESURS", RussiaTY 9169-003-=96785767-07; Composition: E163 (anthocyanins - coloring agents), E330 (citric acid), E422 (glycerol), E1520 (propan-1,2-diol or propylene glycol), E471 (mono- and diglycerides of fatty acides used as emulsifiers, stabilizers, thickeners and gelling agents),E202 (potassium sorbate), (Current EU approved additives and their E Numbers updated on 20 June 2014);
- Aromacolor SC (E150d) food additive, approved for use by the Rospotrebnadzor agency. The food additive Aromacolor SC (E150d) - product of "SICNA s.r.l.", Vicolo Madonna 9, 20020 Cassina Nuova di Bollate Milano (IT) is sulphite ammonia caramel. Composition: E150d (Current EU approved additives and their E Numbers as updated on 20 June 2014). Certificate Nº 77.99.26.9.Y.14070.12.06, SanPin 2.3.2.1078-01 "Hygienic requirements for safety and nutritional value of food products"; SanPin 2.3.2.1293-03 "Hygienic requirements for the use of food additives"; certified laboratory analysis, specification;
- vitamin premixes, approved for use by the Rospotrebnadzor agency. One example of a vitamin premix is Vitamin premix 963/7:
   Ingredients: 19.271 mg Pyridoxine (Vitamin B6); 158.400 mg Niacinamide 2.720 mg Folic acid; 90.350 mg Pantothenic acid; 624.000 mg Vitamin C/ Media products manufactured: DSM Nutritional Products Europe Ltd.", CH-4002 Basel, Switzerland at the plant "DSM Nutritional Products France S.A.", 1 Boulevard d'alsace, F-68128, Village-Neuf (France)
   Composition: Biologically-active substances (mg/kg): Vitamin B6 - 19.271;Folic acid - 2.720; Vitamin C - 642.0
      - guarana extract, approved for use by the Rospotrebnadzor agency;
      - gaseous carbon dioxide and liquid carbon dioxide defined in the standard GOST 8050-85;
      - drinking water defined in SanPiN (sanitary norms and regulations) 2.1.4.1074-01, and SanPiN 2.1.4.1175-02.

Materials used for preparing wine-based carbonated tonic energy drinks shall meet the requirements of the technical regulations of the Customs Union 029/2011 "Safety requirements for food additives, flavorings, and technological processing aids" and the technical regulations of the Customs Union 021/2011 "On Food Safety." Further details relating to materials referenced herein can be found, for example, in Eisenman, L., "The home winemakers manual" (1999) or Eisenman, L., "Common Winemaking Materials" a copy of which is filed concurrently with the present application.

Use of rectified ethyl alcohol in the blending is not permitted.

The references to E Numbers herein refer to the E numbers of approved European Union food additives. The definitions of these additives are to be taken from the current EU approved additives and their E Numbers as updated on 20 June 2014. Regulation (EC) 1333/2008 sets the rules for food additives including definitions, conditions of use, labeling requirements and procedures. Regulation (EU) No. 231/2012 sets forth the specifications for food additives listed in Annexes II and III to Regulation (EC) no. 1333/2008. The list of authorized food additives approved for use as food additives, enzymes and flavorings can be found in Regulation 2011/1130/EU.

When preparing a wine-based carbonated tonic (energy) drink indirect materials are used, which are provisioned by GOST R 51159-2009 and/or permitted by the Rospotrebnadzor agency.

Used flavorings, additives, extracts and premixes are registered in the "Register of products that have undergone state registration" (issued by the Federal Service on Customers' Rights Protection and Well-Being of Humans Federal Service for Control in the Sphere of Protection Consumers' Rights and Well-Being of Humans).

GOST and other standards mentioned in this application are as follows:
GOST P 52523-2006 - Table wines and table winestocks. General specifications
GOST P 52836-2007 - Table fruit wines and table fruit winestocks. General specifications
GOST 908-2004 - Citric acid monohydrate for use in foodstuffs. Specifications
GOST 21-94 - Granulated sugar. Specifications
GOST P 53396-2009 - White sugar. Specifications
GOST 8050-85 - Gaseous and liquid carbon dioxide. Specifications
SanPin 2.1.4.1074-01/2.1.4.1175-02 - Sanitary-Epidemiological Rules And Regulations
TP TC 021/2011 - Requirements for safety of food products
TP TC 029/2012 - Safety requirements for food additives, flavorings and technological AIDS
GOST P 51159-2009 - Wine drinks. General specifications

The drink is prepared as follows. In a known manner the water is prepared meeting the requirements of the technical regulations of the Customs Union 021/2011 "On Food Safety". The ingredients are blended, at the same time the wine-making materials should possess bottling stability. If necessary the wine-making materials are treated in accordance with the "General rules of treatment of grape wine-making materials to ensure their bottling stability and test methods for wine-making materials for susceptibility to turbidity of physico-chemical nature," approved on 05.05.98 by the Ministry of Agriculture and Food products of the Russian Federation.

Sugar is recommended to be added in the form of 65-70% syrup. Sugar syrup is prepared in accordance with the requirements of the "Collection of technological instructions and regulatory materials for the production of non-alcoholic products," approved by the Ministry of Agriculture and Food products of the Russian Federation on 23.07.99.

Sugar syrup is prepared by a hot/hot procedure both with one-time filling of a certain quantity of sugar necessary for preparation and use of a continuously operating sugar dissolving unit.

Prepared sugar syrup is filtered through bag-type filters, cooled to a temperature of 15-20 °C and pumped into a storage tank for sugar syrup.

Flavorings are dissolved in water.

The prepared blend, if necessary, is checked for bottling stability and treated to impart stability, in accordance with the "General rules of treatment of grape wine-making materials to ensure their bottling stability and test methods for wine-making materials for susceptibility to turbidity of physical and chemical nature," approved on 05.05.98 by the Ministry of Agriculture and Food products of the Russian Federation.

The prepared blend is filtered, then cooled to a temperature of 20 °C - 40 °C, carbonated and bottled. Pasteurization of the prepared blend or final product is recommended.

For preparation of a 1000 dal of wine-based flavored carbonated tonic energy drink, ingredients are used with the following content in kg for 1000 dal of the final product:

| | |
|---|---|
| sugar | 949,5-950,5 |
| citric acid | 64,8-65,2 |
| Tenstrike flavoring | 14,0-18,0 |
| Ecotan complex food additive | 14,8-15,2 |
| guarana extract | 5,1-5,5 |
| Aromacolor food additive | 1,8-2,2 |
| vitamin premix 963/7 | 2,3-2,7 |
| carbon dioxide | 44,8-45,2 |
| and also in dal: | |
| table dry white wine-making material, not less than | 500 dal |
| prepared water | the rest. |

### VARIANTS FOR CARRYING OUT THE INVENTION

### Example 1

To prepare 1000 dal of wine-based flavored carbonated tonic energy drink, the ingredients are used with the following content in kg for 1000 dal of the final product:

| | |
|---|---|
| sugar | 949,5 |
| citric acid | 64,8 |
| Tenstrike flavoring | 16,0 |
| Ecotan complex food additive | 14,8 |
| guarana extract | 5,1 |
| Aromacolor food additive | 1,8 |
| 961 vitamin premix | 2,3 |
| carbon dioxide | 44,8, |
| and also in dal: | |
| table dry white wine-making material, not less than | 500 dal |
| prepared water | the rest. |

### Example 2

To prepare 1000 dal of wine-based flavored carbonated tonic energy drink, the ingredients are used with the following content in kg for 1000 dal of the final product:

| | |
|---|---|
| sugar | 950,0 |
| citric acid | 65,0 |
| Tenstrike flavoring | |
| YO-224-011-6 (Zhivodan, Germany) | 16,5 |
| Ecotan complex food additive | |
| 0029/2 (ECO-RESOURCE, RF) | 15,0 |
| guarana extract FP 37400081.00 (Fruitarom, USA) | 5, 3 |
| Aromacolor SC (E150d) food additive (SICNA, Italy) | 2,0 |
| 963/7 vitamin premix (DSM, France) | 2,5 |
| carbon dioxide | 45,0 |
| and also in dal: | |
| table dry white wine-making material | 500 dal |
| prepared water | the rest. |

### Example 3

To prepare 1000 dal of the drink, the ingredients are used with the following content in kg for 1000 dal of the final product:

| | |
|---|---|
| sugar | 950,5 |
| citric acid | 65,2 |
| Tenstrike flavoring | 17,0 |
| Ecotan complex food additive | 15,2 |
| guarana extract | 5, 5 |
| Aromacolor food additive | 2,2 |
| 963/7 vitamin premix | 2, 7 |
| carbon dioxide | 45,2 |
| and also in dal: | |
| table dry white wine-making material | |
| not less than | 500 dal |
| prepared water | the rest. |

The invention enhances energy properties of the natural final product by 10% and organoleptic properties by 0,1 point.

The wine-based flavored carbonated tonic energy drink has the following characteristics:
Physico-chemical parameters:

| | |
|---|---|
| volume fraction of ethyl alcohol, % | 7,0 |
| mass concentration of sugar grams per cubic decimeter, | |
| calculated as inverted sugar | 120,0 ± 5,0 |
| mass concentration of titratable acids, | |
| calculated as wine acid, grams per cubic decimeter | 10,0-11,0 |
| mass concentration of sulfur dioxide, milligrams per cubic decimeter, not more than | 200 |
| mass fraction of carbon dioxide%, not less than | 0,45 |

| **Indicator name** | **Characteristic** |
|---|---|
| Transparency | Transparent, without sediment or impurities. When poured into a glass, foam is formed and bubbles of carbon dioxide are liberated. |
| Color | From red to dark red. |
| Aroma | Harmonious, balanced, with berry tones combined with wine tones, slightly reminiscent of juniper. |
| Taste | Sour-sweet, balanced with a subtle cooling touch. |

## Claims

1. A wine-based flavored carbonated tonic energy drink **characterized by** being prepared with the following ingredients: table dry white wine-making material, sugar, citric acid, Tenstrike flavoring, Ecotan complex food additive , guarana extract, Aromacolor food additive, vitamin premix, carbon dioxide and water prepared with the following content for 1000 dal of the final product: 949,5-950,5 kg of sugar, 64,8-65,2 kg of citric acid, 14,0-18,0 kg of Tenstrike flavoring, 14,8-15,2 kg of Ecotan complex food additive, 5,1-5,5 kg of guarana extract, 1,8-2,2 kg of Aromacolor food additive, 2,3-2,7 kg of vitamin premix, 44,8-45,2 kg of carbon dioxide, at least 500 kg of dry white table wine-making material and the remainder prepared water.
